# EUROPEAN PATENT APPLICATION

(11) **EP 4 814 240 A1**
(43) Date of publication of application: **30.09.2026**
(21) Application number: 26162934.9
(22) Date of filing: 06.03.2026
(51) Int. Cl.: E05B 47/00, E05B 47/02, E05B 81/06, E05C 1/06, B60L 53/16

(54) **ELECTRONIC LOCK**

(30) Priority: 11.03.2025 CN 202510283549
(71) Applicant: Tyco Electronics (Shanghai) Co., Ltd., Pilot Free Trade Zone Shanghai 200131 (CN); Tyco Electronics Technology (SIP) Ltd., Suzhou 215026 (CN)
(72) Inventor: Wen, Xianwen, Suzhou, 32 215123 (CN); Wu, Super, Suzhou, 32 215123 (CN); Zhu, Fangyue, Shanghai, 200233 (CN)
(74) Representative: Grünecker Patent- und Rechtsanwälte PartG mbB

(57) **Abstract**

The present application discloses an electronic lock, comprising a lock rod, a transmission device, and a motor gear. The transmission device comprises a sleeve and a turntable fixedly connected to an end of the sleeve, wherein the turntable is provided with transmission teeth configured to mesh with the motor gear. An inner wall of the sleeve is provided with internal threads. The lock rod comprises a rod portion and a cylindrical base fixedly connected to an end of the rod portion, and the base is disposed inside the sleeve of the transmission device. A lateral surface of the base is provided with external threads that mesh with the internal threads of the sleeve. The rod portion is cylindrical and extends from an interior of the sleeve to an exterior of the electronic lock. In addition to a gear transmission, the transmission device also adopts a thread transmission, which may shorten an overall length of the electronic lock and avoid a retraction problem.

## Description

### CROSS-REFERENCE TO RELATED APPLICATION

The present disclosure claims the priority of Chinese Application No. 202510283549.4 filed on March 11, 2025. and entitled "Electronic Lock", the whole disclosure of which is incorporated herein by reference.

### TECHNICAL FIELD

The present application relates to an electronic lock for a charging dock of an electric vehicle. Specifically, it relates to an electronic lock with a shortened transmission chain and a reduced overall size of a lock body.

### BACKGROUND

Electronic locks are essential components in European standard AC charging docks. During vehicle charging using a plug-in charging gun, the electronic lock serves to secure a head of the gun and feeds back a signal to the vehicle indicating that the charging gun is locked. Currently, lock rods in most electronic locks available on the market are actuated by a gear transmission structure. This type of transmission structure typically has a long transmission chain, occupies significant space within the lock body, and lacks a self-locking function. After the lock rod of the electronic lock extends out of a housing of the electronic lock to achieve a locked state, the lock rod may be easily pushed back to a retracted state if a pressure is applied to it, failing to maintain the locked state. Furthermore, after the lock rod extends out of a housing of the electronic lock into the locked state, a current motor of the electronic lock may generate a back electromotive force, which may cause reverse rotation of the transmission device, leading to unintended retraction of the lock rod.

### SUMMARY

To overcome the aforementioned or other drawbacks in the prior art, the present application provides an electronic lock for an electric vehicle. In addition to a gear transmission, the transmission device of the electronic lock further employs a thread transmission, thereby shortening the transmission chain between the motor and the lock rod and reducing an overall length of the electronic lock.

According to one aspect of the present application, there is provided an electronic lock, comprising a lock rod, a transmission device, and a motor gear, characterized in that the transmission device comprises a sleeve and a turntable fixedly connected to an end of the sleeve, the turntable is provided with transmission teeth configured to mesh with the motor gear, an inner wall of the sleeve is provided with internal threads, the lock rod comprises a rod portion and a cylindrical base fixedly connected to an end of the rod portion, the base is disposed inside the sleeve of the transmission device, wherein a lateral surface of the base is provided with external threads that mesh with the internal threads of the sleeve, and the rod portion is cylindrical and extends from an interior of the sleeve to an exterior of the electronic lock.

According to an exemplary embodiment of the present application, the turntable comprises a frustoconical portion, and the transmission teeth are disposed on a lateral surface of the frustoconical portion.

According to an exemplary embodimentof the present application, the electronic lock further comprises an upper housing, wherein the upper housing is provided with a lock hole positioned opposite to the sleeve of the transmission device, the rod portion of the lock rod extends from the interior of the sleeve, passes through the lock hole, and extends to the exterior of the electronic lock, wherein a limiting flange is provided on an inner wall of the upper housing at a periphery of the lock hole, the limiting flange extends into the interior of the sleeve, and the sleeve is rotatable around the limiting flange.

According to an exemplary embodiment of the present application, the electronic lock further comprises a lower housing, wherein the turntable of the transmission device is rotatably disposed on a bottom wall of the lower housing.

According to an exemplary embodiment of the present application, a rotating shaft is provided on the bottom wall of the lower housing, the rotating shaft projects toward the turntable of the transmission device, and the turntable is sleeved on the rotating shaft and rotatable around the rotating shaft.

According to an exemplary embodiment of the present application, a recess is provided at a center of a bottom of the turntable of the transmission device for receiving the rotating shaft of the lower housing.

According to an exemplary embodiment of the present application, the recess of the turntable of the transmission device is in communication with the sleeve, wherein a diameter of the recess is smaller than an inner diameter of the sleeve.

According to an exemplary embodiment of the present application, a cross-section of the rod portion is in an axisymmetric shape.

According to an exemplary embodiment of the present application, the cross-section of the rod portion is oblong.

According to an exemplary embodiment of the present application, the electronic lock further comprises an unlocking device, which comprises a rack disposed between the turntable of the transmission device and a first side wall of the lower housing, the turntable is provided with unlocking teeth, and teeth of the rack mesh with the unlocking teeth of the turntable.

According to an exemplary embodiment of the present application, the turntable of the transmission device further comprises a disk-shaped portion disposed at a bottom of the frustoconical portion, and the unlocking teeth are disposed on an outer peripheral edge of the disk-shaped portion.

According to an exemplary embodiment of the present application, a back side of the rack abuts against the first side wall of the lower housing and is slidable thereon, such that the rack is slidable along the first side wall until one end of the rack reaches a second side wall of the lower housing, wherein the second side wall is adjacent to the first side wall.

According to an exemplary embodiment of the present application, the unlocking device further comprises a pull rod fixedly connected to the other end of the rack, the pull rod extends from an interior to an exterior of the lower housing for pulling the rack to slide along the first side wall of the lower housing.

According to an exemplary embodiment of the present application, a buffer pad is disposed between the one end of the rack and the second side wall.

In each of the aforementioned exemplary embodiments of the present application, the advantages are listed as follows: in addition to a gear transmission, the transmission device further employs a thread transmission, which shortens a transmission chain between the motor and the lock rod, thereby reducing the overall length of the electronic lock and saving space. The present application uses a turntable-type transmission structure, which reduces the number of transmission parts, simplifies the assembly process, and thus improves assembly efficiency. Moreover, the reduced number of transmission parts also decreases the number of molds required for part production, saving manufacturing costs. Furthermore, the transmission device of the present application may improve holding force, achieve self-locking retention, and prevent unintended retraction of the lock rod caused by the back electromotive force generated by the motor.

Other objects and advantages of the present application will become apparent through the following description of the present application with reference to the accompanying drawings, which will also help to provide a comprehensive understanding of the present application.

### BRIEF DESCRIPTION OF THE DRAWINGS

FIG. 1 is a perspective view of an electronic lock according to an exemplary embodiment of the present application, with an upper housing of the electronic lock removed to show an internal structure of the electronic lock;
FIG. 2 is a cross-sectional view of the electronic lock in a locked state according to an exemplary embodiment of the present application, showing interaction between a transmission device and a lock rod of the electronic lock;
FIG. 3 is a cross-sectional view of the electronic lock according to an exemplary embodiment of the present application in an unlocked state, showing interaction between the transmission device and the lock rod;
FIG. 4 is a perspective view of the lock rod of the electronic lock according to an exemplary embodiment of the present application;
FIG. 5 is a partial view of an unlocking device of the electronic lock in a locked state according to an exemplary embodiment of the present application, showing interaction between the transmission device and a rack of the electronic lock; and
FIG. 6 is a partial view of the unlocking device of the electronic lock in a unlocked state according to an exemplary embodiment of the present application, showing interaction between the transmission device and the rack.

The accompanying drawings are for illustrative purposes only and do not limit the scope of the present application. The dimensions and proportions in the drawings are not drawn to scale.

### DETAILED DESCRIPTION OF EMBODIMENTS

The technical solutions of the present application will be further specifically described below through embodiments and with reference to the accompanying drawings. In the specification, the same or similar reference numerals denote the same or similar components. The following description of the embodiments of the present application with reference to the accompanying drawings is intended to explain the general inventive concept of the present application and should not be construed as a limitation thereof.

In addition, in the following detailed description, for the purpose of explanation, numerous specific details are set forth to provide a comprehensive understanding of the disclosed embodiments. However, it will be apparent that one or more embodiments may be practiced without these specific details. In other instances, well-known structures and devices are illustrated in schematic form to simplify the drawings.

According to a general inventive concept of the present application, there is provided an electronic lock comprising a lock rod, a transmission device, and a motor gear, characterized in that the transmission device comprises a sleeve and a turntable fixedly connected to an end of the sleeve, the turntable is provided with transmission teeth configured to mesh with the motor gear, an inner wall of the sleeve is provided with internal threads, the lock rod comprises a rod portion and a cylindrical base fixedly connected to an end of the rod portion, the base is disposed inside the sleeve of the transmission device, wherein an outer circumferential surface of the base is provided with external threads that are in meshing engagement with the internal threads of the sleeve, the rod portion is of a cylindrical configuration and extends outwardly from an interior of the sleeve to an exterior of the electronic lock, and a cross-section of the rod portion is a non-circular shape.

In addition to a gear transmission, the transmission device of the electronic lock according to the present application further adopts a thread transmission, which shortens the transmission chain between the motor and the lock rod, thereby reducing an overall length of the electronic lock and saving space. The present application employs a turntable-type transmission structure, which reduces the number of transmission parts and simplifies the assembly process, thereby improving assembly efficiency. Furthermore, the reduced number of transmission parts decreases the number of molds required for producing the parts, saving production costs. Additionally, the transmission device of the present application may enhance the holding force and achieve self-locking retention.

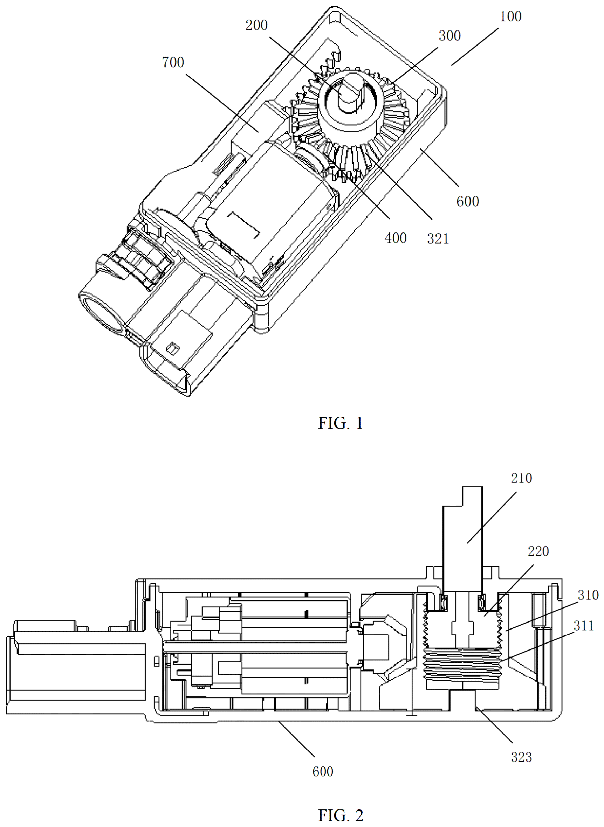

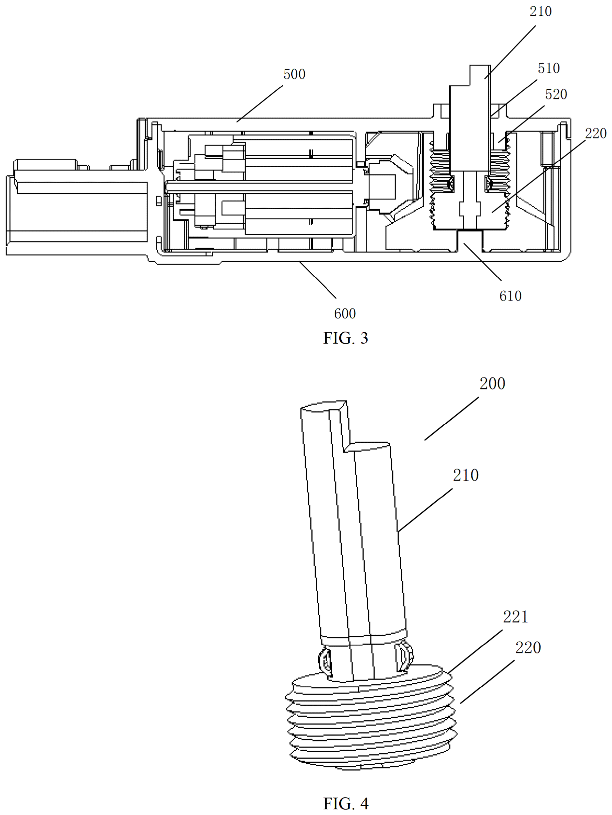

FIG. 1 is a perspective view of an electronic lock 100 according to an exemplary embodiment of the present application, with an upper housing 500 of the electronic lock 100 removed to show an internal structure of the electronic lock 100; FIG. 2 is a cross-sectional view of the electronic lock 100 in a locked state according to an exemplary embodiment of the present application, showing interaction between a transmission device 300 and a lock rod 200 of the electronic lock 100; FIG. 3 is a cross-sectional view of the electronic lock 100 in an unlocked state according to an exemplary embodiment of the present application, showing interaction between the transmission device 300 and the lock rod 200; FIG. 4 is a perspective view of the lock rod 200 of the electronic lock 100 according to an exemplary embodiment of the present application.

As shown in the figures, the electronic lock 100 according to the present application comprises a lock rod 200, a transmission device 300 and a motor gear 400, wherein the transmission device 300 comprises a sleeve 310 and a turntable 320 fixedly connected to an end of the sleeve 310; the turntable 320 is provided with transmission teeth 321, which are configured to mesh with the motor gear 400; an inner wall of the sleeve 310 is provided with internal threads 311; the lock rod 200 comprises a rod portion 210 and a cylindrical base 220 fixedly connected to an end of the rod portion 210; the base 220 is disposed inside the sleeve 310 of the transmission device 300, wherein an outer circumferential surface of the base 220 is provided with external threads 221, and the external threads 221 are in meshing engagement with the internal threads 311 of the sleeve 310; the rod portion 210 is cylindrical and extends outwardly from an interior of the sleeve 310 to an exterior of the electronic lock 100, and a cross-section of the rod portion 210 is a non-circular shape.

Typically, the shape of the lock hole 510 on a housing of the electronic lock 100 is configured to be similar to the shape of the cross-section of the lock rod 200. When the lock rod 200 is configured to have a non-circular shape, correspondingly, the lock hole 510 of the housing of the electronic lock 100 will form a rotational limiting member for the lock rod 200, preventing the lock rod 200 from rotating about its axis. Thus, the lock rod 200 may only perform telescopic movement along the lock hole 510 instead of rotation about its axis.

As shown in FIGS. 1-3, when the motor drives the gear thereon to rotate, the turntable 320 of the transmission device 300 rotates about the axis under the action of the transmission teeth 321. The sleeve 310 of the transmission device 300 and thus the threads inside the sleeve 310 also rotate with the turntable 320. Correspondingly, on one hand, a screwing force is generated between the internal threads 311 inside the sleeve 310 and the external threads 221 on the outer circumferential surface of the base 220 of the lock rod 200. On the other hand, since the lock hole 510 on the housing of the electronic lock 100 also exerts a rotational limiting effect on the lock rod 200, under the combined action of these two forces, the lock rod 200 performs telescopic movement.

In the electronic lock 100 according to the present application, thread transmission is adopted between the lock rod 200 and the transmission device 300. The thread structure may form self-locking for the extended or retracted state of the lock rod 200. The lock rod 200 will not be easily pressed back due to a large holding force, and will not be affected by the back electromotive force generated by the motor to cause unwanted retraction, either.

Wherein, the turntable 320 comprises a frustoconical portion 322, and the transmission teeth 321 are disposed on a lateral surface of the frustoconical portion 322 to form a bevel gear. In addition, a bevel gear is also mounted on the drive shaft of the motor, and this bevel gear is in meshing engagement with the transmission teeth 321 on the lateral surface of the frustoconical portion 322 of the turntable 320, thereby driving the turntable 320 of the transmission device 300 to rotate about the axis.

A person skilled in the art will understand that the drive teeth on the motor may have various forms, and correspondingly, the transmission teeth 321 of the transmission device 300 meshing therewith may also have various forms, which are not limited to those disposed on the turntable 320 and on the frustoconical portion 322 of the turntable 320. In addition, the turntable 320 of the transmission device 300 is not necessarily limited to the specific form of the present embodiment, as long as the sleeve 310 may be rotated about the axis.

As shown in the figures, the electronic lock 100 further comprises an upper housing 500, wherein the upper housing 500 is provided with a lock hole 510 positioned opposite to the sleeve 310 of the transmission device 300, the rod portion 210 of the lock rod 200 extends outwardly from the interior of the sleeve 310, passes through the lock hole 510, and extends to the exterior of the electronic lock 100, wherein a limiting flange 520 is provided on an inner wall of the upper housing 500 at a periphery of the lock hole 510, the limiting flange 520 extends into the interior of the sleeve 310, and the sleeve 310 of the transmission device 300 is rotatable about the limiting flange 520.

Wherein, when the electronic lock 100 is locked, the lock rod 200 extends outwardly to a maximum length, and the cylindrical base 220 of the lock rod 200 abuts against the limiting flange 520.

Here, the sleeve 310 of the transmission device 300 is a circular so as to be rotatable relative to the cylindrical base 220 of the lock rod 200.

The electronic lock 100 further comprises a lower housing 600, wherein the turntable 320 of the transmission device 300 is rotatably mounted on a bottom wall of the lower housing 600.

As shown in the figures, a rotating shaft 610 is provided on the bottom wall of the lower housing 600, the rotating shaft 610 projects toward the turntable 320 of the transmission device 300, which is sleeved on the rotating shaft 610 and rotatable about the rotating shaft 610.

Here, the rotating shaft 610 has a positioning function for the transmission device 300 and is used to fix the transmission device 300 at a specific position of the lower housing 600 to ensure that the transmission teeth 321 of the transmission device 300 remain in meshing engagement with the teeth of the motor. When the electronic lock 100 is unlocked, the lock rod 200 is fully retracted and abuts against an end of the rotating shaft 610, and the rotating shaft 610 has a stopping effect on the lock rod 200.

Correspondingly, a recess 323 is provided at a center of a bottom of the turntable 320 of the transmission device 300 for receiving the rotating shaft 610 of the lower housing 600. As shown in the figures, the recess 323 of the turntable 320 of the transmission device 300 is in communication with the sleeve 310, wherein a diameter of the recess 323 is smaller than an inner diameter of the sleeve 310. Thus, a shoulder is formed between the recess 323 and the sleeve 310. Of course, the recess 323 and the sleeve 310 may not be in communication with each other. The recess 323 itself forms a blind hole.

A person skilled in the art will understand that the arrangement of the recess 323 of the transmission device 300 and the rotating shaft 610 of the lower housing 600 described above is merely exemplary and not restrictive, and there may be many other forms as long as relative rotation between the recess 323 and the rotating shaft 610 may be achieved. For example, a rotating shaft may be provided at the center of the bottom of the turntable 320 of the transmission device 300, and a recess may be provided at a corresponding position of the lower housing 600. In addition, for example, a bearing may be disposed between the rotating shaft 610 and the recess 323 to facilitate sliding between the rotating shaft 610 and the recess 323.

Wherein, as shown in FIG. 4, the rod portion 210 of the lock rod 200 is made of a conductive material, the base 220 is made of rubber, and the rod portion 210 is inserted and molded into the base 220.

Wherein, the cross-section of the rod portion 210 may be designed to be in an axisymmetric shape. More specifically, the cross-section of the rod portion 210 may be designed to be oblong.

The shape of the cross-section of the rod portion 210 of the lock rod 200 described above is merely exemplary. A person skilled in the art will understand that other cross-sectional shapes are also possible, such as square, triangular, as long as they are not circular.

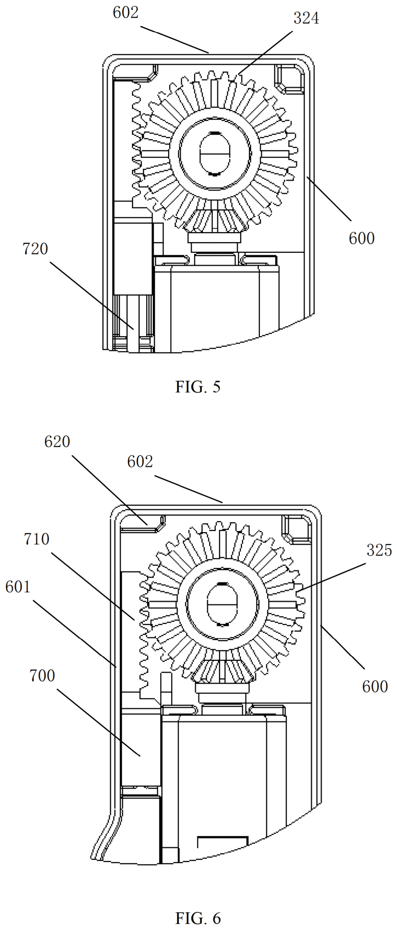

FIG. 5 is a partial view of an unlocking device 700 of the electronic lock 100 in a locked state according to an exemplary embodiment of the present application, showing interaction between the transmission device 300 and a rack 710 of the electronic lock 100; and FIG. 6 is a partial view of the unlocking device 700 of the electronic lock 100 in an unlocked state according to an exemplary embodiment of the present application, showing interaction between the transmission device 300 and the rack 710.

As shown in the figures, the electronic lock 100 according to an exemplary embodiment of the present application further comprises an unlocking device 700with a rack 710 disposed between the turntable 320 of the transmission device 300 and a first side wall 601 of the lower housing 600, the turntable 320 is provided with unlocking teeth 324 being in meshing engagement with the teeth of the rack 710.

Wherein, as shown in FIGS. 1-3, the turntable 320 of the transmission device 300 further comprises a disk-shaped portion 325 disposed at a bottom of the frustoconical portion 322, and the unlocking teeth 324 are disposed on an outer peripheral edge of the disk-shaped portion 325.

Wherein, a back side of the rack 710 abuts against the first side wall 601 of the lower housing 600 and is slidable thereon, such that the rack 710 may slide along the first side wall 601 until one end of the rack 710 abuts against a second side wall 602 of the lower housing 600, wherein the second side wall 602 is adjacent to the first side wall 601.

Wherein, the unlocking device 700 further comprises a pull rod 720, which is fixedly connected to the other end of the rack 710 and extends from an interior to an exterior of the lower housing 600 for pulling the rack 710 to slide along the first side wall 601 of the lower housing 600.

Typically, the electronic lock 100 is powered by a motor, which transmits power to the lock rod 200 via the transmission device 300 to drive the lock rod 200 to lock or unlock. When the lock rod 200 is locked and the motor malfunctions, an external force may be applied to pull the pull rod 720 outside the electronic lock 100, causing the rack 710 to slide back along the first side wall 601. Due to the meshing engagement between the teeth of the rack 710 and the unlocking teeth 324 on the turntable 320 of the transmission device 300, the turntable 320 of the transmission device 300 rotates, driving the lock rod 200 to retract, thereby achieving unlocking.

Wherein, a buffer pad 620 is disposed between the one end of the rack 710 and the second side wall 602. The buffer pad 620 may buffer impact between the rack 710 and the second side wall 602 of the lower housing 600 and also have a noise reduction effect to reduce an noise generated by the impact.

In the electronic lock 100 according to the present application, on one hand, internal and external thread transmission is adopted in the transmission device 300. The lock rod 200 telescopes through the thread transmission between the external threads 221 on the base 220 of the lock rod 200 and the internal threads 311 in the sleeve 310 of the turntable 320 of the transmission device 300. The transmission chain is shortened, thereby reducing the overall length of the electronic lock 100 and saving space. On the other hand, the electronic lock 100 of the present application uses a turntable-type transmission structure, reducing the number of transmission parts, simplifying the assembly process, and thus improving assembly efficiency. In addition, the reduced number of transmission parts also decreases the number of molds required for producing the parts, saving production costs. Furthermore, the transmission device 300 of the present application may improve the holding force and form self-locking. Specifically, the thread structure may form self-locking for the extended or retracted state of the lock rod 200. The lock rod 200 will not be easily pressed back due to a large holding force, and will not be affected by the back electromotive force generated by the motor to cause unwanted retraction, either.

A person skilled in the art will understand that the embodiments described above are all exemplary, and modifications may be made thereto by the person skilled in the art. The structures described in the various embodiments may be freely combined without conflict in structure or principle.

Although the present application has been described in conjunction with the accompanying drawings, the embodiments disclosed in the drawings are intended to be illustrative of the preferred embodiments of the present application and should not be construed as a limitation to the present application.

Although the present application has been shown and described with reference to certain embodiments of the general inventive concept, the person skilled in the art will understand that various changes may be made to these embodiments without departing from the principles and spirit of the general inventive concept, and the scope of the present application is defined by the claims and their equivalents.

It should be noted that the term "comprising" does not exclude other elements or steps, and the term "a" or "an" does not exclude a plurality. In addition, any reference numerals in the claims should not be construed as limiting the scope of the present application.

## Claims

1. An electronic lock (100), comprising a lock rod (200), a transmission device (300), and a motor gear (400), **characterized in that** the transmission device (300) comprises a sleeve (310) and a turntable (320) fixedly connected to an end of the sleeve (310), the turntable (320) is provided with transmission teeth (321) configured to mesh with the motor gear (400), an inner wall of the sleeve (310) is provided with internal threads (311), the lock rod (200) comprises a rod portion (210) and a cylindrical base (220) fixedly connected to an end of the rod portion (210), the base (220) is disposed inside the sleeve (310) of the transmission device (300), wherein a lateral surface of the base (220) is provided with external threads (221) that mesh with the internal threads (311) of the sleeve (310), and the rod portion (210) is cylindrical and extends from an interior of the sleeve (310) to an exterior of the electronic lock (100).

2. The electronic lock (100) according to claim 1, **characterized in that** the turntable (320) comprises a frustoconical portion (322), and the transmission teeth (321) are disposed on a lateral surface of the frustoconical portion (322).

3. The electronic lock (100) according to claim 2, **characterized in that** the electronic lock (100) further comprises an upper housing (500), wherein the upper housing (500) is provided with a lock hole (510) positioned opposite to the sleeve (310) of the transmission device (300), the rod portion (210) of the lock rod (200) extends from the interior of the sleeve (310), passes through the lock hole (510), and extends to the exterior of the electronic lock (100), wherein a limiting flange (520) is provided on an inner wall of the upper housing (500) at a periphery of the lock hole (510), the limiting flange (520) extends into the interior of the sleeve (310), and the sleeve (310) is rotatable around the limiting flange (520).

4. The electronic lock (100) according to claim 2, **characterized in that** the electronic lock (100) further comprises a lower housing (600), wherein the turntable (320) of the transmission device (300) is rotatably disposed on a bottom wall of the lower housing (600).

5. The electronic lock (100) according to claim 4, **characterized in that** a rotating shaft (610) is provided on the bottom wall of the lower housing (600), the rotating shaft (610) projects toward the turntable (320) of the transmission device (300), and the turntable (320) is sleeved on the rotating shaft (610) and rotatable around the rotating shaft (610).

6. The electronic lock (100) according to claim 4, **characterized in that** a recess (323) is provided at a center of a bottom of the turntable (320) of the transmission device (300) for receiving the rotating shaft (610) of the lower housing (600).

7. The electronic lock (100) according to claim 5, **characterized in that** the recess (323) of the turntable (320) of the transmission device (300) is in communication with the sleeve (310), wherein a diameter of the recess (323) is smaller than an inner diameter of the sleeve (310).

8. The electronic lock (100) according to claim 1, **characterized in that** a cross-section of the rod portion (210) is in an axisymmetric shape.

9. The electronic lock (100) according to claim 8, **characterized in that** the cross-section of the rod portion (210) is oblong.

10. The electronic lock (100) according to claim 2, **characterized in that** the electronic lock (100) further comprises an unlocking device (700), which comprises a rack (710) disposed between the turntable (320) of the transmission device (300) and a first side wall (601) of the lower housing (600), the turntable (320) is provided with unlocking teeth (324), and teeth of the rack (710) mesh with the unlocking teeth (324) of the turntable (320).

11. The electronic lock (100) according to claim 10, **characterized in that** the turntable (320) of the transmission device (300) further comprises a disk-shaped portion (325) disposed at a bottom of the frustoconical portion (322), and the unlocking teeth (324) are disposed on an outer peripheral edge of the disk-shaped portion (325).

12. The electronic lock (100) according to claim 10, **characterized in that** a back side of the rack (710) abuts against the first side wall (601) of the lower housing (600) and is slidable thereon, such that the rack (710) is slidable along the first side wall (601) until one end of the rack (710) reaches a second side wall (602) of the lower housing (600), wherein the second side wall (602) is adjacent to the first side wall (601).

13. The electronic lock (100) according to any one of claims 10 to 12, **characterized in that** the unlocking device (700) further comprises a pull rod (720) fixedly connected to the other end of the rack (710), the pull rod (720) extends from an interior to an exterior of the lower housing (600) for pulling the rack (710) to slide along the first side wall (601) of the lower housing (600).

14. The electronic lock (100) according to claim 12, **characterized in that** a buffer pad (620) is disposed between the one end of the rack (710) and the second side wall (602).
